# EUROPÄISCHE PATENTSCHRIFT

(11) **EP 1 893 379 B1**
(45) Veröffentlichungstag und Bekanntmachung des Hinweises auf die Patenterteilung: **28.03.2012**
(21) Anmeldenummer: 06755073.1
(22) Anmeldetag: 08.05.2006
(51) Int. Cl.: B23H 9/00, F02M 61/16

(54) **WERKZEUG ZUR ELEKTRO-CHEMISCHEN BEARBEITUNG EINER KRAFTSTOFF-EINSPRITZVORRICHTUNG**
TOOL FOR THE ELECTROCHEMICAL MACHINING OF A FUEL INJECTION DEVICE
OUTIL POUR L'USINAGE, PAR VOIE ELECTROCHIMIQUE, D'UN DISPOSITIF D'INJECTION DE CARBURANT

(30) Priorität: 16.06.2005 DE 102005027844
(43) Veröffentlichungstag der Anmeldung: 05.03.2008
(73) Patentinhaber: ROBERT BOSCH GMBH, 70442 Stuttgart (DE)
(72) Erfinder: ZIEGLER, Christian, 66557 Illingen (DE); BEETZ, Steffen, 66424 Homburg (DE); SCHERER, Rudolf, 66916 Breitenbach (DE); MOSER, Stefan, 66450 Bexbach (DE)
(86) Internationale Anmeldenummer: PCT/EP2006/062128
(87) Internationale Veröffentlichungsnummer: WO 2006/134004

(56) Entgegenhaltungen:
- EP-A- 0 446 165
- DE-A1- 3 531 761
- FR-A- 2 864 916
- US-A- 6 110 350

## Beschreibung

### Stand der Technik

Die Erfindung betrifft ein Werkzeug zur elektro-chemischen Bearbeitung einer Kraftstoff-Einspritzvorrichtung, entsprechend dem Oberbegriff des Anspruchs 1.

Kraftstoff-Einspritzvorrichtungen sind Komponenten von Kraftstoff-Einspritzsystemen. Mit diesen Systemen kann Kraftstoff aus einem Vorratsbehälter den Brennräumen einer Brennkraftmaschine zugeführt werden. Hierbei können Pumpen, insbesondere Hochdruckpumpen, zum Einsatz kommen, die den Kraftstoff mit Druck beaufschlagen und den Kraftstoff-Einspritzvorrichtungen zuführen. Letztere weisen üblicherweise ein Gehäuse auf, in dem mehrere Räume zur Leitung und/oder Aufnahme von Kraftstoff vorgesehen sind. Zwischen diesen Räumen können scharfkantige Übergangsbereiche ausgebildet sein, insbesondere dann, wenn die einzelnen Räume spanend hergestellt sind. In den Bereichen der scharfkantigen Übergänge können Grate ausgebildet sein, die vor Inbetriebnahme der Kraftstoff-Einspritzvorrichtung entfernt werden müssen.

Neben mechanischen Verfahren besteht die Möglichkeit, diese Grate im Wege der elektro-chemischen Bearbeitung zu entfernen. Ein solches Verfahren sieht vor, dass eine als Kathode geschaltete Elektrode einem zu entgratenden Bearbeitungsbereich einer Kraftstoff-Einspritzvorrichtung zugeführt wird, wobei letztere als Anode geschaltet wird. Dem Bearbeitungsbereich kann eine Elektrolytflüssigkeit zugeführt werden, wodurch an der als Kathode geschalteten Elektrode und an dem als Anode geschalteten Werkstück elektro-chemische Reaktionen ablaufen. An der Anode werden positiv geladene Kationen abgetragen, die zusammen mit Hydroxidionen zu einem Metallhydroxid reagieren und als Schlamm ausfallen. An der Kathode finden verschiedene chemische Reduktionsreaktionen statt.

Das beschriebene Verfahren eignet sich gut, um eine genau definierte Materialmenge von dem Gehäuse einer Kraftstoff-Einspritzvorrichtung abtragen zu können. Es kann jedoch, insbesondere in Hinterschnittbereichen des Gehäuses, schwierig sein, die Elektrode in der Kraftstoff-Einspritzvorrichtung so zu positionieren, dass ein optimaler Arbeitsspalt zwischen Elektrode und Arbeitsbereich gebildet ist.

Aus der DE 35 31 761 A1 ist eine Vorrichtung zur Herstellung einer gekrümmten Bohrung bekannt, wobei die Bohrung mittels einer auf einer stetig gekrümmten Bahn geführten Elysierelektrode aus dem Werkstück herausgearbeitet wird, und die Elysierelektrode eine der zu schaffenden Bohrung entsprechende Krümmung aufweist.

Hiervon ausgehend liegt der vorliegenden Erfindung die Aufgabe zugrunde, ein Werkzeug zur elektro-chemischen Bearbeitung einer Kraftstoff-Einspritzvorrichtung dahingehend weiterzuentwickeln, dass eine Entgratung auch in Hinterschnittbereichen der Kraftstoff-Einspritzvorrichtung mit guten Materialabtragsraten und zuverlässiger elektrischer Kontaktierung des Elektrodenelements ermöglicht ist.

Diese Aufgabe wird durch ein Werkzeug mit den Merkmalen des Anspruchs 1 gelöst. Vorteilhafte Ausgestaltungen sind in den Unteransprüchen angegeben.

### Vorteile der Erfindung

Dadurch, dass das Elektrodenelement relativ zum Elektrodenhalter beweglich angeordnet ist, kann das Elektrodenelement unabhängig vom Elektrodenhalter bewegt werden. Somit kann der Elektrodenhalter in die Kraftstoff-Einspritzvorrichtung eingeführt und das Elektrodenelement unabhängig vom Elektrodenhalter beispielsweise mit Hilfe eines Betätigungselements in ihrer Lage relativ zum Bearbeitungsbereich eingestellt werden. Über das Betätigungselement kann also insbesondere die Breite des Arbeitsspalts zwischen Elektrodenelement und dem Bearbeitungsbereich eingestellt werden. Somit können auch sehr schwierig zugängliche Bearbeitungsbereiche mit hohen Materialabtragsraten bearbeitet werden. Durch den guten Materialabtrag wird auch erreicht, dass Vor- und Nacharbeitsschritte, die gegebenenfalls manuell durchgeführt werden müssen, entfallen können. Dies trägt dazu bei, dass die Kraftstoff-Einspritzvorrichtung in hohen Stückzahlen und hoher Qualität herstellbar ist.

### Zeichnungen

Nachfolgend werden besonders bevorzugte Ausführungsbeispiele der vorliegenden Erfindung unter Bezugnahme auf die beiliegende Zeichnung näher erläutert. In der Zeichnung zeigen:
- Figur 1: eine geschnittene Darstellung eines Werkzeugs gemäß einer ersten Ausführungsform, wobei ein Elektrodenelement eine erste Lage einnimmt;
- Figur 2: eine der Figur 1 entsprechende Darstellung, wobei das Elektrodenelement eine zweite Lage einnimmt;
- Figur 3: eine geschnittene Darstellung eines Werkzeugs gemäß einer zweiten Ausführungsform der Erfindung, wobei ein Elektrodenelement eine erste Lage einnimmt; und
- Figur 4: eine der Figur 3 entsprechende Darstellung, wobei das Elektrodenelement eine zweite Lage einnimmt.

### Beschreibung der Ausführungsbeispiele

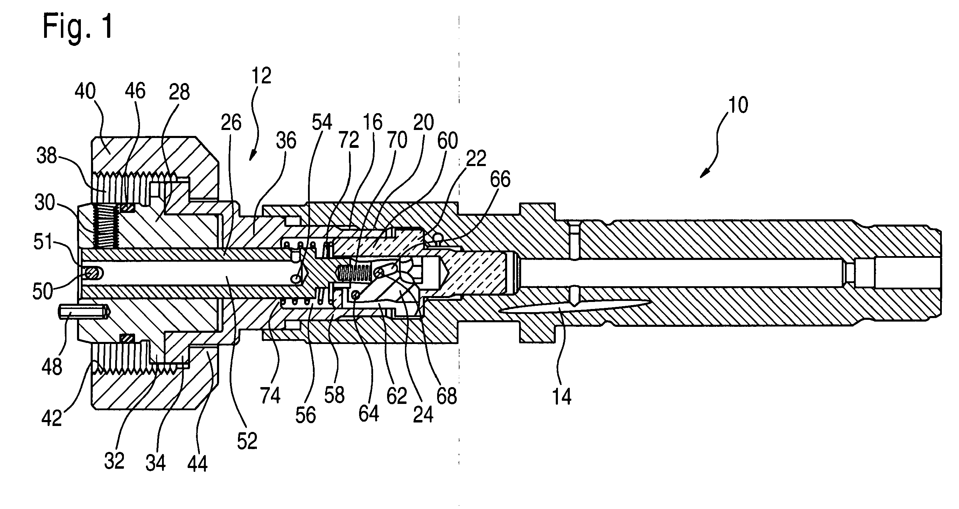

In Figur 1 trägt das Gehäuse einer Kraftstoff-Einspritzvorrichtung das Bezugszeichen 10 und ein Werkzeug zur Bearbeitung der Einspritzvorrichtung das Bezugszeichen 12.

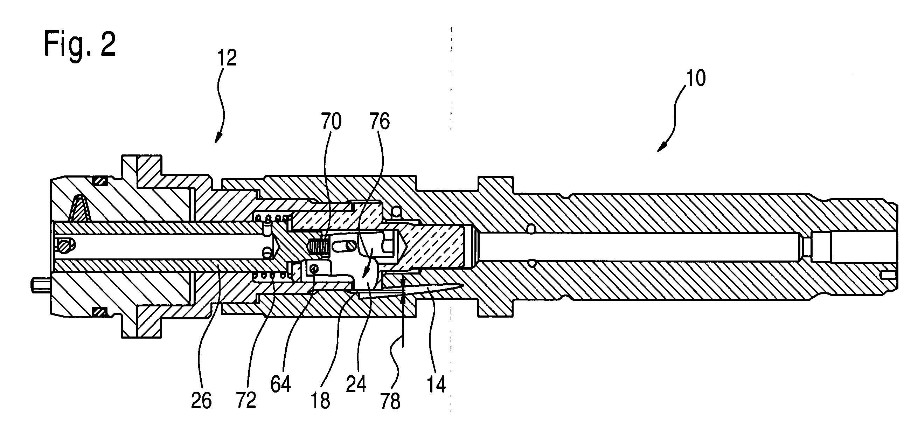

In der Einspritzvorrichtung 10 ist eine Bohrung 14 vorgesehen, die in den in den Figuren 1 und 2 gewählten Schnittebenen in unterschiedlichen Abschnitten dargestellt ist. Die Bohrung 14 mündet in einen im Wesentlichen rotationssymmetrischen Raum 16, in dem das Werkzeug 12 teilweise aufgenommen ist. Die Räume 14 und 16 grenzen aneinander an und bilden dort einen Bearbeitungsbereich 18, von dem Gratmaterial mit Hilfe des Werkzeugs 12 abgetragen werden soll.

Der Bearbeitungsbereich 18 ist benachbart zu einem Vorsprung 20 vorgesehen, der sich in den Raum 16 hineinerstreckt, so dass aus Sicht des Werkzeugs 12 der Bearbeitungsbereich 18 in einem Hinterschnittbereich liegt und daher schwer zugänglich ist.

Das Werkzeug 12 weist einen vollständig im Raum 16 der Einspritzvorrichtung 10 aufgenommenen Elektrodenhalter 22 aus elektrisch isolierendem Material auf, ferner ein Elektrodenelement 24, das schwenkbar an dem Elektrodenhalter 22 gelagert ist und ein Betätigungselement 26, das länglich ausgebildet ist und aus dem Raum 16 der Einspritzvorrichtung 10 herausragt.

Das Betätigungselement 26 ist im Wesentlichen zylindrisch ausgebildet und in einem Aufnahmeelement 28 verschieblich gelagert. Mit Hilfe einer Stiftschraube 30, die im Aufnahmeelement 28 gelagert ist und sich radial zum Betätigungselement 26 erstreckt, kann dieses in einer definierten Lage innerhalb des Aufnahmeelements 28 fixiert werden.

Das Aufnahmeelement 28 weist einen nach radial außen weisenden Vorsprung 32 auf, der an einen Kragen 34 grenzt, der an einem Führungselement 36 ausgebildet ist. In dem Führungselement 36 ist das Betätigungselement 26 geführt. Der Vorsprung 32 des Aufnahmeelements 28 und der Kragen 34 des Führungselements 36 sind in einem Innenraum 38 eines Spannelements 40 aufgenommen. Das Spannelement 40 begrenzt den Innenraum 38 mit einem Innengewinde 42. Über einen den Kragen 34 des Führungselements 36 hintergreifenden Kopf 44 kann das Spannelement 40 und somit das Aufnahmeelement 28 sowie das Führungselement 36 an einer nicht dargestellten Maschine festgespannt werden, so dass das Werkzeug 12 mit elektrischer Energie und mit Elektrolytflüssigkeit versorgt werden kann. Der Innenraum 38 des Spannelements 40 ist dabei gegenüber der nicht dargestellten Maschine mit Hilfe einer Dichtung 46 abgedichtet. Das Aufnahmeelement 28 weist an seinem der Einspritzvorrichtung 10 abgewandten Ende einen Stift 48 auf, mit dem die radiale Lage des Werkzeugs 12 relativ zur Maschine definiert ist.

Das Aufnahmeelement 28 weist ferner an seinem der Einspritzvorrichtung abgewandten Ende einen Führungsstift 50 auf, der in eine Nut 51 des Betätigungselements 26 greift, so dass die Drehlage des Betätigungselements 26 relativ zu dem Aufnahmeelement 28 definiert ist.

Das Betätigungselement 26 weist in seinem Inneren eine Leitung 52 auf, die an dem der Einspritzvorrichtung 10 zugewandten Ende an einer Bohrung 54 mündet. Die Bohrung 54 führt zu einem Fluidraum 56, der von einer Hülse 58 begrenzt ist, die einstückig mit dem Führungselement 36 ausgebildet ist.

In die Hülse 58 taucht der Elektrodenhalter 22 mit einem Wandabschnitt 60 ein und begrenzt mit diesem Wandabschnitt 60 einen Elektrodenraum 62.

Der Elektrodenhalter 22 weist einen Bolzen 64 auf, an dem das Elektrodenelement 24 schwenkbar gelagert ist. Das Elektrodenelement 24 weist ferner eine Kulisse 66 auf, in der ein Kulissenstift 68 aufgenommen ist, der Teil des Betätigungselements 26 ist.

Zwischen Betätigungselement 26 und Elektrodenelement 24 ist eine Kontaktfeder 70 angeordnet. Diese ist mit einem Ende fest im Material des Betätigungselements 26 verankert und drückt mit ihrem anderen Ende gegen das Elektrodenelement 24, so dass über die Kontaktfeder 70 eine elektrische Verbindung zwischen Betätigungselement und Elektrodenelement 24 hergestellt ist.

Benachbart zum Elektrodenhalter 22 ist eine Druckfeder 72 vorgesehen, die sich mit einem Ende an der Stirnfläche des Wandabschnitts 60 des Elektrodenhalters 22 abstützt. Die Druckfeder 72 stützt sich an ihrem anderen Ende an einer Schulter 74 ab, die im Führungselement 36 ausgebildet ist. In Figur 1 ist das Elektrodenelement 24 in seinem eingefahrenen Zustand dargestellt. Um das Elektrodenelement 24 in die in Figur 2 dargestellte ausgefahrene Lage zu bringen, werden das Aufnahmeelement 28 und das Spannelement 40 über einen nicht dargestellten Antrieb in Richtung auf die Einspritzvorrichtung 10 bewegt. Durch die Verbindung zwischen Aufnahmeelement 28 und Betätigungselement 26 wird das Betätigungselement 26 entgegen der Wirkung der Druckfeder 72 in den Elektrodenraum 62 hineinbewegt. Dabei gleitet der Kulissenstift 68 innerhalb der Kulisse des Elektrodenelements 24, so dass das Elektrodenelement 24 in mit 76 bezeichneter Schwenkrichtung in Richtung auf den Bearbeitungsbereich 18 verschwenkt wird. Somit kann ein Arbeitsspalt 78 zwischen dem Elektrodenelement 24 und dem Bearbeitungsbereich 18 optimal eingestellt werden.

Die Kontaktfeder 70 ist in der in Figur 2 dargestellten Lage des Elektrodenelements 24 gegenüber der in Figur 1 dargestellten Lage des Elektrodenelements 24 komprimiert. Sie kann somit in jeder Lage des Elektrodehelements 24 die elektrische Kontaktierung zwischen Betätigungselement 26 und Elektrodenelement 24 sicherstellen.

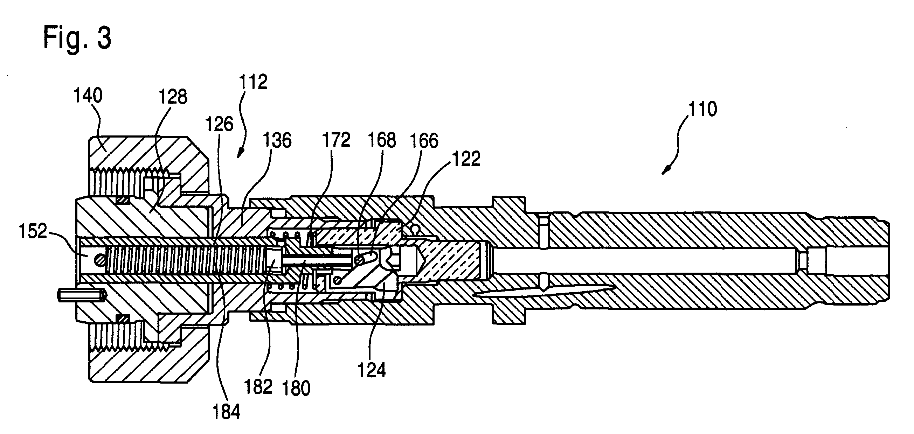

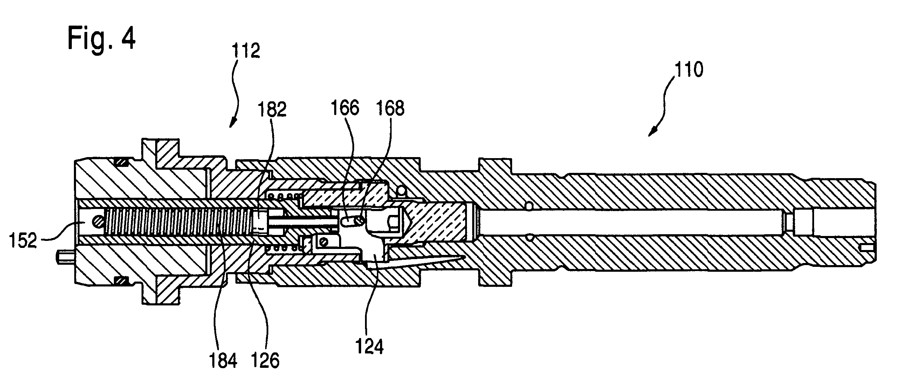

Die in Figuren 3 und 4 dargestellte Ausführungsform der Erfindung unterscheidet sich hinsichtlich der in den Figuren 1 und 2 dargestellten Ausführungsform durch die Ausgestaltung der elektrischen Kontaktierung des Elektrodenelements. Mit Bezug auf Figur 3 ist eine Einspritzvorrichtung 110 vorgesehen, in die ein Werkzeug 112 abschnittsweise eintaucht. Das Werkzeug 112 entspricht in seinem wesentlichen Aufbau dem des Werkzeugs 12 gemäß Figuren 1 und 2. Auch das Werkzeug 112 weist einen Elektrodenhalter 122, ein Elektrodenelement 124 sowie ein Betätigungselement 126 auf. Das Betätigungselement 126 ist in einem Aufnahmeelement 128 aufgenommen, in einem Führungselement 136 geführt und kann mit Hilfe eines Spannelements 140 an einer nicht dargestellten Maschine befestigt werden. Das Betätigungselement 126 weist an seinem dem Elektrodenelement 124 zugewandten Ende ein verschieblich gelagertes Bolzenelement 180 auf, das in Anlagekontakt mit dem Elektrodenelement 124 steht. Das Bolzenelement 180 weist an seinem dem Elektrodenelement 124 abgewandeten Ende einen Bolzenkopf 182 auf, der von einer Feder 184 mit Druck beaufschlagt wird, um das Bolzenelement 180 zur elektrischen Kontaktierung auf das Elektrodenelement 124 zu drücken.

In Figur 3 ist das Werkzeug 112 im eingefahrenen Zustand des Elektrodenelements 124 dargestellt. Indem das Werkzeug 112 in die Einspritzvorrichtung 110 hineinbewegt wird, wird eine Feder 172 zusammengedrückt. Das Betätigungselement 126 mit seinem Kulissenstift 168 wird in die Einspritzvorrichtung hineinbewegt, so dass das Elektrodenelement in seine ausgefahrene Lage gelangt (siehe Figur 4). In der in Figur 4 dargestellten Lage des Elektrodenelements 124 ist das Bolzenelement 180 gegenüber der in Figur 3 dargestellten Lage um ein Stück verschoben, wodurch die Feder 184 zusammengedrückt wird. Die Feder 184 bewirkt, dass in jeder Lage des Elektrodenelements 124 dessen elektrische Kontaktierung sichergestellt ist.

## Patentansprüche

1. Werkzeug (12, 112) zur elektro-chemischen Bearbeitung einer Kraftstoff-Einspritzvorrichtung (10, 110), mit einem Elektrodenhalter (22, 122) und einem Elektrodenelement (24, 124), das während der Bearbeitung der Kraftstoff-Einspritzvorrichtung (10, 110) eine Kathode bildet, um in einem Bearbeitungsbereich (18) Material der Kraftstoff-Einspritzvorrichtung (10, 110) elektro-chemisch abtragen zu können, wobei das Elektrodenelement (24, 124) relativ zum Elektrodenhalter (22, 122) beweglich angeordnet ist,
**dadurch gekennzeichnet, dass** ein Betätigunselement ist, über welches die Lage des Elektrodenelements (24, 124) relativ zum Bearbeitungsbereich (18) und unabhängig vom Elektrodenhalter veränderbar ist, und dass zur elektrischen Kontaktierung des Elektrodenelements (24) ein im Betätigungselement (126) verschieblich gelagertes, insbesondere federbelastetes Bolzenelement (180) und/oder eine Feder (70) vorgesehen ist, die sich zwischen Betätigungselement (26) und Elektrodenelement (24) abstützt.

2. Werkzeug (12, 112) nach Anspruch 1, **dadurch gekennzeichnet, dass** das Elektrodenelement (24, 124) schwenkbar am Elektrodenhalter (22, 122) gelagert ist.

3. Werkzeug (12, 112) nach mindestens einem der Ansprüche 1 bis 2, **dadurch gekennzeichnet, dass** das Betätigungselement (26, 126) und das Elektrodenelement (24, 124) über einen Führungsbereich, insbesondere über eine Kulissenführung (66, 68), miteinander in Verbindung stehen.

4. Werkzeug (12, 112) nach mindestens einem der vorhergehenden Ansprüche, **dadurch gekennzeichnet, dass** der Elektrodenhalter (22, 122) und das Betätigungselement (26, 126) über eine Feder (72, 172) zumindest mittelbar zueinander vorgespannt sind.

5. Werkzeug (12, 112) nach mindestens einem der vorhergehenden Ansprüche, **dadurch gekennzeichnet, dass** das Betätigungselement (26, 126) zur Leitung von Elektrolytflüssigkeit ausgebildet ist.

6. Werkzeug (12, 112) nach mindestens einem der vorhergehenden Ansprüche, **dadurch gekennzeichnet, dass** der Elektrodenhalter (22, 122) aus einem elektrisch isolierenden Material gebildet oder mit einem solchen Material beschichtet ist.

7. Werkzeug (12, 112) nach mindestens einem der vorhergehenden Ansprüche, **dadurch gekennzeichnet, dass** das Betätigungselement (26, 126) verschieblich und/oder drehbar in Aufnahmemitteln (28, 128) aufgenommen ist, die mit einer Maschine koppelbar sind, die einen elektrischen Anschluss und/oder Elektrolytflüssigkeit für das Werkzeug bereitstellt.

8. Werkzeug (12, 112) nach Anspruch **dadurch gekennzeichnet, dass** Mittel (30, 50, 51) zur Einstellung und/oder Festlegung der Lage des Betätigungselements (26, 126) in den Aufnahmemitteln (28, 128) vorgesehen sind.

9. Werkzeug (12, 112) nach Anspruch 7 oder 8, **dadurch gekennzeichnet, dass** Mittel (48) zur Einstellung und/oder Festlegung der Lage der Aufnahmemittel (28, 128) in der Maschine vorgesehen sind.

## Claims

1. Tool (12, 112) for the electrochemical machining of a fuel injection device (10, 110), comprising an electrode holder (22, 122) and an electrode element (24, 124), which, during the machining of the fuel injection device (10, 110), forms a cathode, in order to make it possible to electrochemically remove material from the fuel injection device (10, 110) in a machining region (18), wherein the electrode element (24, 124) is arranged so as to be movable in relation to the electrode holder (22, 122), **characterized in that** provision is made of an actuating element, by means of which the position of the electrode element (24, 124) can be changed in relation to the machining region (18) and independently of the electrode holder, and **in that** electrical contact is made with the electrode element (24) by providing an, in particular spring-loaded, stud element (180) mounted displaceably in the actuating element (126) and/or a spring (70) which is supported between the actuating element (26) and the electrode element (24).

2. Tool (12, 112) according to Claim 1, **characterized in that** the electrode element (24, 124) is mounted pivotably on the electrode holder (22, 122).

3. Tool (12, 112) according to at least one of Claims 1 to 2, **characterized in that** the actuating element (26, 126) and the electrode element (24, 124) are connected to one another via a guide region, in particular via a slotted guide (66, 68).

4. Tool (12, 112) according to at least one of the preceding claims, **characterized in that** the electrode holder (22, 122) and the actuating element (26, 126) are prestressed with respect to one another at least indirectly via a spring (72, 172).

5. Tool (12, 112) according to at least one of the preceding claims, **characterized in that** the actuating element (26, 126) is designed to conduct electrolytic liquid.

6. Tool (12, 112) according to at least one of the preceding claims, **characterized in that** the electrode holder (22, 122) is formed from an electrically insulating material or is coated with such a material.

7. Tool (12, 112) according to at least one of the preceding claims, **characterized in that** the actuating element (26, 126) is held displaceably and/or rotatably in receiving means (28, 128), which can be coupled to a machine which provides an electrical connection and/or electrolytic liquid for the tool.

8. Tool (12, 112) according to Claim 7, **characterized in that** means (30, 50, 51) for setting and/or fixing the position of the actuating element (26, 126) in the receiving means (28, 128) are provided.

9. Tool (12, 112) according to Claim 7 or 8, **characterized in that** means (48) for setting and/or fixing the position of the receiving means (28, 128) in the machine are provided.

## Revendications

1. Outil (12, 112) de traitement électrochimique d'un dispositif (10, 110) d'injection de carburant, l'outil présentant un porte-électrodes (22, 122) et un élément d'électrode (24, 124) qui forme une cathode pendant le traitement du dispositif (10, 110) d'injection de carburant de manière à pouvoir retirer par voie électrochimique du matériau du dispositif (10, 110) d'injection de carburant dans une zone de traitement (18),
l'élément d'électrode (24, 124) étant disposé de manière à pouvoir se déplacer par rapport au porte-électrodes (22, 122),
**caractérisé en ce que**
l'outil présente un élément d'actionnement par lequel la position de l'élément d'électrode (24, 124) par rapport à la zone de traitement (18) peut être modifiée indépendamment du porte-électrodes et
**en ce qu'**un élément en goujon (180), en particulier sollicité par ressort, et/ou un ressort (70) monté à coulissement dans l'élément d'actionnement (126) sont prévus pour assurer le contact électrique de l'élément d'électrode (24) et s'appuient entre l'élément d'actionnement (26) et l'élément d'électrode (24).

2. Outil (12, 112) selon la revendication 1, **caractérisé en ce que** l'élément d'électrode (24, 124) est monté à pivotement sur le porte-électrodes (22, 122).

3. Outil (12, 112) selon au moins l'une des revendications 1 et 2, **caractérisé en ce que** l'élément d'actionnement (26, 126) et l'élément d'électrode (24, 124) sont reliés l'un à l'autre dans une zone de guidage, en particulier par un guide coulissant (66, 68).

4. Outil (12, 112) selon au moins l'une des revendications précédentes, **caractérisé en ce que** le porte-électrodes (22, 122) et l'élément d'actionnement (26, 126) sont précontraints l'un par rapport à l'autre au moins indirectement par un ressort (72, 172).

5. Outil (12, 112) selon au moins l'une des revendications précédentes, **caractérisé en ce que** l'élément d'actionnement (26, 126) est configuré pour conduire un liquide d'électrolyte.

6. Outil (12, 112) selon au moins l'une des revendications précédentes, **caractérisé en ce que** le porte-électrodes (22, 122) est formé d'un matériau électriquement isolant ou est revêtu d'un tel matériau.

7. Outil (12, 112) selon au moins l'une des revendications précédentes, **caractérisé en ce que** l'élément d'actionnement (26, 126) est repris à coulissement et/ou à rotation dans des moyens de reprise (28, 128) qui peuvent être accouplés à une machine qui établit le raccordement électrique et/ou apporte un liquide d'électrolyte à l'outil.

8. Outil (12, 112) selon la revendication 7, **caractérisé en ce qu'**il présente des moyens (30, 50, 51) d'établissement et/ou de fixation de la position de l'élément d'actionnement (26, 126) dans les moyens de reprise (28, 128).

9. Outil (12, 112) selon les revendications 7 ou 8, **caractérisé en ce qu'**il présente des moyens (48) d'ajustement et/ou d'immobilisation de la position des moyens de reprise (28, 128) dans la machine.
